# EUROPEAN PATENT SPECIFICATION

(11) **EP 0 398 298 B1**
(45) Date of publication and mention of the grant of the patent: **18.11.1993**
(21) Application number: 90109259.3
(22) Date of filing: 16.05.1990
(51) Int. Cl.: B09B 3/00, C02F 11/00, C04B 18/02, C04B 32/00

(54) **Method for transforming surplus mud from purification processes for civil and/or industrial recycled water into inert substances and plant for the realisation of this method**
Verfahren zur Transformierung überschüssiger Schlämme von Reinigungsverfahren ziviler und/oder industrieller wasserrückgewinung in inerten Substanzen und Anlage zum Realisieren dieses Verfahrens
Procédé pour transformer les boues en surplus des procédés de purification des eaux recyclées civile et/ou industrielles en substances inertes et installation pour la réalisation de ce procédé

(30) Priority: 17.05.1989 IT 346789
(43) Date of publication of application: 22.11.1990
(73) Proprietor: S.VE.D.A. srl Società Veneta Depuratori e Affini, Silea (IT)
(72) Inventor: Cenacchi, Giovanni, I-40100 Bologna (IT); Zambelli, Alessio, I-31100 Treviso (IT)
(74) Representative: Jorio, Paolo

(56) References cited:
- EP-A- 0 170 212
- EP-A- 0 173 355
- EP-A- 0 293 982
- EP-A- 0 294 362
- WO-A-88/02284
- GB-A- 1 601 559
- CHEMICAL ABSTRACTS, vol. 98, 1983, page 312, abstract no. 184628p, Columbus, Ohio, US; & JP-A-57 200 259 (DAIDO STEEL CO., LTD) 08-12-1982
- CHEMICAL ABSTRACTS, vol. 83, 1975, page 411, abstract no. 64952h, Columbus, Ohio, US; & GB-A-1 388 349 (IMPERIAL CHEMICAL INDUSTRIES LTD) 26-03-1975

## Description

This invention relates to a method for the transformation of surplus mud front purification processes for civil and/or industrial recycled water into inert substances, and a plant for the realisation of this method.

It is known that purification processes for civil and/or industrial recycled water entail successive stages: biological, physical and chemical, which serve to separate the waters form the solid or semi-solid substances contained in them, and also to neutralise to the maximum the noxious and/or toxic substances contained in the resulting water.

Muds containing non-dregradable noxious or toxic substances are originated from such processes, and these represent an ecological problem which is not easily solved.

The most immediate solution consists in the muds being placed in suitable dumps, but at the same time these are not easy to find. This solution does not solve the problem in that the volatile substances in the muds tend to pollute the atmospheric environment, whereas the liquid substances in the muds may pollute the water-bearing strata, unless the dumps are fully impermeable. Moreover, this solution is clearly temporary, since the filling up of a dump then raises the urgent problem of clearing the mud.

The use of incinerating furnaces to eliminate the muds entails a plurality of problems. In fact, the extensive use of air, in relation to the weight of the treated muds, may produce intolerable levels of atmospheric pollution due to combustion fumes.

The ashes produced by combustion contain the most dangerous forms of inorganic substances fot the environment, such as, for example, chromium-, cadmium-, lead-based and other similar substances. It then follows that the same problem arises for the ashes as for the muds from which they are derived, unless they are then made inert.

A further solution entails the mixture of muds with clay (using a ratio of 1:4) in order to obtain bricks, or expanded clay, which is then subjected to the conventional operative stages relating to brick manufacture.

In this case, the above-mentioned inorganic substances are enclosed in the bricks, but cannot be considered inactive since the bricks are not impermeable. In other words, these bricks represent potential pollution agents.

A method for the transformation of muds into inert substances was recently proposed, as illustrated in Italian patent No. 1.200.233 (application No. 3518A/86 dated 20.10.1986) by the same applicants. This method consists, in substance, in successively drying the muds, burning the dried muds, mixing the burnt muds with wet clay, pelletising the mixture of burnt muds and clay, and lastly, baking the pellets obtained in this way until their sinterisation in a vetrify state.

The above-mentioned method in practice allows surplus muds from purification processes to be transformed into a granulated sintered substance, known as pellets, containing inorganic noxious substances.

The scope of this invention is to improve the solution of the problem described above by excogitating a method which allows the transformation of surplus muds from recycled civil and/or industrial water purification processes into absolutely inert substances from the point of view of the release of polluting agents.

A further aim of this invention is to propose a plant for the realisation of this method which uses a simple technical solution, offers functional security and reliability, and is of versatile use.

The above-mentioned scopes are archieved by the present method for the transformation of surplus muds from civil and/or industrial recycled water purification processes into completely inert substances as defined in Claim 1.

The characteristics of the invention will be made more evident by the following description of the method for the transformation of surplus mud from recycled civil and/or industrial water purification processes into absolutely inert substances, with particular reference to the attached table in which the sole illustration shows a flow-chart of the stages for realising the method in question, comprising a sketch of the melting furnace.

The muds originating from recycled civil and/or industrial water purification processes, having been first filtered and compressed still contain a relatively high percentage of water (about the 50% in weight, with reference to the total weight of the wet sludge); they further have a relatively high content of organic substances (carbon represents the 25% in weight referred to the dry sludge) and a variable content of polluting substances, as for instance: Fe, Pb, Cr, Cd, Zn, Cu, Cl, S, F. Said wet muds, which characteristic composition is that described above, are placed in a multiple stage evaporator 1 as indicated by arrow A. Evaporator 1 is of the autoclave type with thermocompression; inside evaporator 1 tne muds are partially dried under vacuum conditions and in an oxygen-free astmosphere. On leaving the evaporator the muds have, for example, a residual humidity comprising between 5 and 10% in weight, referred to the total weight of the mud.

The gases coming out of the evaporator are transported, through a pipe 2, to a condenser 3 which breaks down the condensable substances and separates them from the incondensable gases; these incondensable gases are transported, through a pipe 4, to a post-burning device 5 (or melting furnace 14 as is described below) which discharges the combustion products through an apposite chimney, as indicated by arrow B.

A limited percentage of incondensable gases are present in the condensate liquid which runs out of the condenser 3, prevalently in a acqueous form. The elimination of these gases from the liquid phase is obtained by introducing this liquid into a stripping tower 6. The condensate liquid is transported to the stripping tower 6 through a pipe 7; a further pipe 8 allows the incondensable gases to rise out of the stripping tower 6 into the post-burner 5, or alternatively, into the above-mentioned melting furnace 14.

The liquid from the stripping tower 6 is transported, through a pipe 9, to a series of purification tanks 10 which serve to complete the purification process and provide unpolluted water at exit C.

The partially dried muds coming out of the evaporator 1 are introduced, as indicated by D, into a device 11 inside which they are thoroughly mixed with one or more inert substances selected from the group consisting in: wet quarry clay, free silica, silica-based inerts as silicates or aluminated silicates, ground glass, clayey substances (as. eg. c. clayey minerals and sands); in this step are also added low-molding and stabilizing substances of the type used in the glass industry, as Na₂Co₃ and CaCo₃; the entrance of the aforementioned substances is indicated by arrow E.

The wet mixture so obtained is transported, ad indicated by F, to a device 12 able to bring the mixture into granules, known as pellets. It should be underlined that the partial humidity of the mixture of muds and inert substances makes easier the pellet formation. These pellets are transported, as indicated by G, into a pre-heater 13, for example a rotary cylinder kiln with indirect heating, which completes the drying of the material. According to the present invention, inside the pre-heater 13 there is also carried out a partial calcination of the pellets during which a large part of the organic substances present are expelled; according to one of the peculiar characteristics of the invention, the calcination step, as well as the pre-heating of the pellets, are carried out operating at about 600°C (and up to 900°C) in a reducting atmosphere, e.g. in presence of CO and with a small amount of air.

The pre-heated and calcinated material (at a temperature of about 600°C) is transported, as indicated by H, to a melting furnace 14. As is more clearly specified below, the fused material I coming out of the furnace 14, having been suitably cooled, represents the final product of the mud transformation process. The hot fumes (at a temperature of about 1600°C) coming out of the melting furnace are fed through a pipe 15 to the rotary kiln 13 in counter-current with respect to the pellets, in order to carry out the aforementioned calcination of the same in reducing atmosphere. Having been through the pre-heater 13, these fumes are still at a relatively high temperature (about 900°C C), and it is therefore possible to use this heat recycling it in the plant.

For this purpose, the fumes coming out of the pre-heater 13 are transported, through a pipe 16, to a device 17 which separates the salts present in the fumes themselves, such as NaCl and others; in fact, in a gaseous state these salts are corrosive and must therefore be eliminated by solidification. The solidified salts are reintroduced into the melting furnace 14, as indicated by L. The fumes coming out of the separator 17 are transported, through a pipe 18, to a heat exchanger 19, which works in counter-current with water M to produce vapour N. At the exit of the exchanger 19, the fumes (at a temperature of about 250°C) are partially recycled, through a pipe 20 connected to pipe 16, to decrease the temperature of fumes coming out of the pre-heater below the melting point of the abovementioned salts, and partially transported to the discharge chimney, as indicated by arrow 0, prior to treatment, e.g. electirc filtration, scrubbering or so on. On coming out of the furnace 14 the molten material may be cooled very rapidly, in order to obtain vitreous substance in a granular form.

Otherwise, according to the preferred embodiment of the present invention, the molten material is formed in appropriate plants, like those used for glass, in order to obtain tiles for floorings and/or pavings and/or for covering walls and the like.

In this case the melting step should be followed by a shaping step in which the molten material is fed into molds (e.g. continuous molds in order to form sheets), and by a thermal treating consisting essentially in a controlled cooling of the formed elements. From the tests carried out by the Applicant both the material obtained in granular shape (by means of a rapid cooling e.g. by treating the molten material sprying water on it) and that shaped into tiles according to pre-established geometric shapes are absolutely and completely inert from the point of view of releasing polluting agents, such as inorganic substances containing chromium, cadmium, lead and other heavy metals.

In fact, the silica which is present in the molten material binds to the above-mentioned metals, forming silicates: these silicates form the amorphous vitreous structure which is produced at the moment of cooling, with the result that the final product is completely inert.

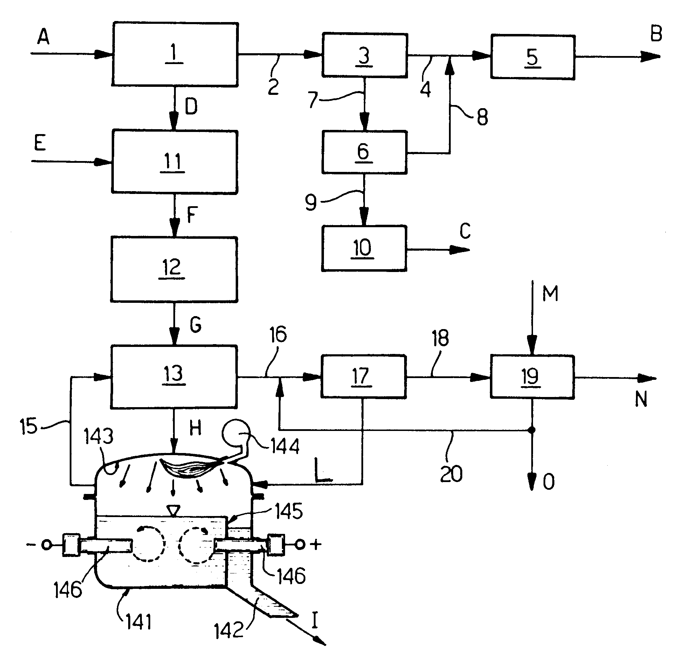

In order to obtain such a result, it is necessary to carry out the fusion of the pellets at high temperatures, operating in a reducing atmosphere and maintaining the melted bath agitated very slowly. This is carried out according to the invention operating with the static furnace 14 shown only schematically in the enclosed drawing. Furnace 14 comprises a basin 141 provided with a discharge canal 142, and a roof 143 defined by a reverberatory crown provided with one or more burners 144. The connection between canal 142 and basin 141 is obtained through a weir or open spillway 145 which controls the level of the melted bath in basin 141 and allows the melted substance to be brought out the furnace without altering the hydraulic conditions of the bath. The latter is in fact maintained smoothly agitated by means of convectice movements due to the presence of at least a pair of electrodes 146, which are immersed in the molten bath and which furnish to the same part of the thermal energy necessary to carry out the fusion. According to the present invention, in fact, the thermal energy required by furnace 14 is furnished for the major part by burning a combustible substance (e.g. by means of burners 144) with a poor ratio betwen fuel and air (e.g. near stoichiometric ratio) in order to obtain a reducing atmosphere inside the furnace (e.g. very rich in CO), and for the remaining part by electricity, allowing an electric current to pass through the bath by means of electrodes 146 so developing heat by Joule effect.

According to the invention the heat energy directly produced via burners 144 is from 60% up to 90% of the total energy consumed by furnace 14, while the heat energy obtained from electricity is from 10% up to 30% of the total energy. A preferred ratio is 70% of direct thermal energy and 30% of electric energy. This allows a perfect temperature control to be obtained.

Operating in a reducing atmosphere both the fusion and the pre-heating (with calcination) of the pellets, using the same gases (which are recirculated from furnace 14, where they are produced by burners 144, to the rotary kiln 13) allows higher temperatures to be reached easier so facilitating the fusion and the formation of silicates which captures the polluting agents constituted by the metallic atoms of Pb, Cr, Fe, Cd, etc. and of F. Simultaneously, the reducing atmosphere allows a reduced volume of fumes to be produced, due to the reduced volume of air necessary for the combustion. This produces a reduction of the costs for treating the outcoming fumes and a large reduction of the energetic costs of the plant; in fact it avoids the necessity to warm a large amount of air up to the high operating temperature of furnace 14.

Another main feature of the method according to the present invention is the step of producing pellets from the mixture of muds and of inerts as clayey and/or silica-based substances. In fact, this step is absolutely necessary in order to obtain, already well before the melting furnace 14, a good dispertion of the noxious substances inside the inert mass of materials which will be melted in the furnace itself, dispersion which woul not be reached directly operating the fusion after the mixing. With reference to the chemical composition of the starting sludge or mud and to the final product which has to be obtained (tile 5 or granulated material) it is possible to use substances principally containing silicates, aluminated silica, free silica or ground glass in place of clay or of clayey substances, as already mentioned; this allows the formation of lead, copper, chromiom, cadmium and zinc silicates, and so forth, at the moment of the fusion of the pellets.

The method described and the plant used to realise it, definitively allow the transformation of surplus muds from recycled water purification processes into completely inert substances. The collocation of these substances does not present problems of an ecological nature; moreover, they can be used to advantage in civil and/ or industrial sectors which require inert material, for example in granular form, or in the shape of ceramized tiles.

The present invention will be now further described with reference to the following examples.

### EXAMPLE 1

1250 kg of muds originated by a purification plant of a painting line present the following composition: 10% of dry substance, 90% of solvents, mainly benzene. The muds are introduced into a pre-treating kiln and are burnt at about 1000°C starting combustion by means of a burner and then maintaining an auto-combustion. At the end of the combustion 125 kg of dry substance, mainly CaCo₃ are obtained. This substance is mixed with 75 kg of wet inerts consisting of 70 kg of SiO₂ and 5 Kg of Na₂CO₃; at the end of the mixing step 200 kg of pellets of 10 mm diameter are obtained. These pellets are fed to a melting furnace of the type used for melting glass having a reverberatory crown provided with a burner able to produce 310.000 Kcal/h and having a basin provided with a couple of opposed submerged electrodes made of molibdenum carbide. Then the fusion of the 200 kg of pellets is carried out operating at 1600°C furnishing 306.500 kcal by means of the burner and 131.200 Kcal by means of the electrodes, between which a voltage of 60÷90 V is applied. At the end of the melting step 610 kg of fumes at 1700°C and 145 Kg of melted substance are obtained. The melted substance is then drastically cooled at environment temperature by treating the same with high pressure jets of cool water. This causes a thermic choc of the melted material which is solidificated and disintegrated, with the formation of small granules of solid material having dimensions up to few mm.

### EXAMPLE 2

From the purification plant of the effluent water of a tannery two groups of muds, each of 1000 kg, are obtained. The composition of the muds is 40% of dry substance and 60% of water.

Each charge of 1000 kg of muds is first dried inside an autoclave, operating at a pressure of 0,2 atm and substantially in absence of oxigen. 560 Kg of water and 440 kg of muds still partially wet (10%) are obtained. Then the 440 kg of dried muds are mixed with 100,6 Kg of inerts, consisting of 92,6 kg of SiO₂ and of 8 kg of Na₂Co₃ and the mixture is reduced into pellets of 15 mm diameter. At the end of this operation 540,6 kg of pellets are obtained. The pellets are introduced firstly in a rotary kiln, in which they are calcinated and pre-heated at about 900°C reducing their weight at 300, 6 kg; at this stage the dry matter of original muds is converted almost entirely into CaSo₄. Then the 300,6 kg of calcinated pellets are introduced in a melting furnace of the type described in Example 1, and are melted at a temperature of 1500°C consumming 45,7 Nm³ of fuel (CH₄) and 188 Kw of electric energy.

When the fusion is accomplished 180 kg of melted material and 2000 kg of fumes are obtained. The 180 kg of melted material obtained from the first group of 1000 kg of tannery muds are cooled as described in Example 1. The other 180 kg of molten material (from the second group of 1000 kg of tannery muds) are poured into square moulds and are cooled very slowly inside a pre-heated furnace the temperature of which is lowered from 1400°C to 400°C. After 5-6 hours a plurality of square tiles of 20x20 cm are obtained.

### EXAMPLE 3

Samples are taken both from the product of Example 1 and from the products (granules and tiles) of Example 2. Experimental spectrographic tests are performed on said samples 5 and the following concentration of heavy metals are found: Cu 9,8 mg/kg; Cr^{III} 806 mg/kg; Cr^{VI} 0,00 mg/kg; Pb 1565 mg/kg; Cd 0,09 mg/kg; Zn 25,09 mg/kg.

In addition, laboratory tests of assignments using the EPA method (Authority for the Protection of the Environment) are performed on the said samples; these tests reveales the presence of the following concentrations of heavy metals: Cu 0,02 mg/l; Cr III 0,00 mg/l; Cr VI 0,00 mg/l; Cd 0,00 mg/l, Pb 0,02 mg/l; Zn 0,08 mg/l.

These concentrations are all safely within the limits stipulated by Italian legislation for protection from pollution. In addition, the sum of reports relating to the effective concentration and permitted concentration of the single metals, to which it is necessary to refer when different metals are present, provides a value equal to 0,3, which is considerably lower than 10-times less the permitted value prescribed by the law.

## Claims

1. Method for the transformation of surplus muds from civil and/or industrial recycled water purification processes into completely inert substances comprising the steps of:
- reducing said muds into an at least partially dried state;
- mixing said at least partially dried muds with inert substances selected from the group consisting in: clay, wet quarry clay, clayey minerals, clayey sands, free silica, ground glass, silica-based substances containing silicates and/or aluminated silicates;
- bringing the mixture of at least partially dried muds and of inerts into granular form;
- pre-heating said mixture in granular form;
- melting said mixture in granular form at a temperature of a least 1500°C untill the mixture is completely reduced in liquid state;
said melting operation being carried out in a reducing atmosphere; and cooling the melted mixture until solidification takes place.

2. Method according to Claim 1, wherein the fused material is then cooled very rapidly by sprying on it jets of cool water so that the fused material is solidified and simultaneously disintegrated into granules of vitrified material in which the metallic silicates produced during the melting operation due to the chemical reaction of silica with the metals present in the muds are encapsulated.

3. Method according to Claim 1, wherein the fused material is poured into molds and then is cooled very slowly in order to obtain ceramized products of pre-established geometric shape, in which the metallic silicates produced during the melting operation due to the chemical reaction of silica with the metals present in the muds are encapsulated.

4. Method according to one of the foregoing claims, wherein pellets are formed from the mixture of at least partially dried muds and of inert substances.

5. Method according to Claim 4, whrein said dried muds still contain a prefixed amount of humidity.

6. Method according to one the foregoing Claims, wherein said pre-heating is carried out by contacting the mixture in counter-current with hot fumes and operating in a reducing atmosphere.

7. Method as claimed in claim 6, characterised in that during said pre-heating, there is an at least partial calcination of the said mixture, due to the expulsion of part of the organic substances; said pre-heating being carried out at a temperature of about 600+900°C.

8. Method as claimed in claim 6, characterised in that it entails the use of fumes generated by said fusion for the realisation of the said pre-heating, the successive separation, by solidification, of the salts present in the fumes coming out of the pre-heating device, the heat exchange of the fumes, having been purified of the said salts, using water to produce vapour, and lastly, the transportation of a part of said fumes to the discharge and the remainder to be mixed with the fumes coming out of the pre-heating element in order to reduce the temperature of the latter to below the melting point of the above-mentioned salts.

9. Method according to one of the foregoing Claims, wherein said muds are reduced in an at least partially dried state by treating the muds substantially in the absence of oxygen and under vacuum condition by means of a multiple-stage evaporator using thermocompression.

10. Method according to one of the Claims from 1 to 8, wherein said muds are reduced in an at least partially dried state by an auto-combustion of the same.

11. Method according to one of the foregoing Claims, whrein said melting step is carried out using a basin furnace of the type used for melting glass and furnishing the necessary thermal energy partially by means of the combustion of a fuel with air in a reduced amount, in order to generate fumes having reducing properties, and partially by means of electric current.

12. Method according to Claim 11, wherein the electric energy represent from 10% up to 40% of the total energy consumed by the basin furnace.

13. Method according to Claims 11 or 12, wherein the electric energy is fed to the furnace by means of at least a pair of opposite electrodes immersed in the liquid bath contained in the furnace; the liquid bath being subjected to a smooth agitation due to the convective movements produced by the heating generated by said electrodes.

14. Plant for the transformation of surplus muds from civil and/ore industrial recycled water purification processes into completely inert substances comprising a multi-stage evaporator with autoclave (1), inside which the muds are partially dried (A), with thermocompression, a device (11) for mixing the partially dried muds (D) with clayey substances (E) or substances principally containing silicates, aluminated silicates, free silica or ground glass, a device (12) able to realise the reduction of the wet mixture (F) of muds and said substances into granules (G), a pre-heater (13) which is capable of completing the drying of the above-mentioned granules (G), a melting furnace (14) inside which the pre-heated granules (H) are completely melted, and means to let the method granules to solidify by cooling.

15. Plant as claimed in claim 14, characterised in that it comprises a device (17) capable of separating, by solidification, the salts present in the fumes coming out of the said pre-heater (13) a heat exchanger (19), powered by said fumes purified of salts, a pipe (20) connecting the exit of the said heat-exchanger (19) with a chimney and with the entrance of the said device (17) to mix the fumes coming from the same exchanger with the fumes coming from the above-mentioned pre-heater in order to reduce the temperature of the said mixture below the melting point of the above-mentioned salts.

16. Plant as claimed in claim 15, characterised in that the said pre-heater (13) is of the type with a rotating cylinder and is powered in counter-current by the hot fumes coming out of the said melting furnace (14).

## Patentansprüche

1. Verfahren für die Umsetzung von Rückstandsschlämmen aus kommunalen und/oder industriellen Abwasserreinigungsprozessen in vollständig inerte Substanzen, umfassend die Schritte:
- Verdicken der Schlämme in einen mindestens teilweise getrockneten Zustand,
- Mischen der mindestens teilweise getrockneten Schlämme mit Inertsubstanzen, ausgewählt aus der Gruppe, die besteht aus: Ton, feuchtem Grubenton, tonhaltigen Mineralien, tonhaltigen Sanden, freiem Quarz, vermahlenem Glas, Silikate und/oder Aluminatsilikate enthaltenden Quarz basierten Substanzen,
- Bringen des Gemisches aus mindestens teilweise getrockneten Schlämmen und Inertsubstanzen in Granulatform,
- Vorheizen des Gemisches in Granulatform,
- Aufschmelzen des Gemisches in Granulatform bei einer Temperatur von mindestens 1500°C, bis das Gemisch vollständig in Flüssigzustand überführt ist, welcher Aufschmelzarbeitsgang in einer reduzierenden Atmosphäre ausgeführt wird, und
- Abkühlen des geschmolzenen Gemisches, bis die Verfestigung eintritt.

2. Verfahren nach Anspruch 1, bei dem das aufgeschmolzene Material sehr schnell abgekühlt wird durch Besprühen mit Kaltwasserstrahlen, so daß das geschmolzene Material verfestigt und gleichzeitig in Körner aus verglastem Material zerlegt wird, in welche die metallischen Silikate, erzeugt während des Aufschmelzen infolge der chemischen Reaktion von Quarz mit den in den Schlämmen vorhandenen Metallen, eingekapselt werden.

3. Verfahren nach Anspruch 1, bei dem das aufgeschmolzene Material in Formen abgegossen und dann sehr langsam abgekühlt wird, um keramisierte Produkte vorgegebener geometrischer Form zu erzielen, in welchen die metallischen Silikate, erzeugt während des Aufschmelzarbeitsganges infolge der chemischen Reaktion von Quarz mit den in den Schlämmen vorhandenen Metallen, eingekapselt werden.

4. Verfahren nach einem der vorangehenden Ansprüche, bei dem aus dem Gemisch von mindestens teilweise getrockneten Schlämmen und Inertsubstanzen Pellets gebildet werden.

5. Verfahren nach Anspruch 4, bei dem die getrockneten Schlämme noch einen vorbestimmten Gehalt an Feuchtigkeit aufweisen.

6. Verfahren nach einem der vorangehenden Ansprüche, bei dem das Vorheizen ausgeführt wird durch Inkontaktbringen des Gemisches im Gegenstrom mit Heißgasen und Arbeiten in einer reduzierenden Atmosphäre.

7. Verfahren nach Anspruch 6, dadurch gekennzeichnet, daß während des Vorheizens mindestens eine teilweise Kalzination des Gemisches erfolgt infolge des Austreibens eines Teiles der organischen Substanzen, wobei das Vorheizen bei einer Temperatur von etwa 600 bis 900°C ausgeführt wird.

8. Verfahren nach Anspruch 6, dadurch gekennzeichnet, daß es die Verwendung von Rauchgasen mit sich bringt, erzeugt durch das Aufschmelzen für die Realisierung des Vorheizens, die nachfolgende Abtrennung durch Verfestigung von Salzen, die in den aus der Vorheizeinrichtung stammenden Rauchgasen vorhanden sind, den Wärmeaustausch der Rauchgase, die von den Salzen gereinigt worden sind unter Anwendung von Wasser zum Erzeugen von Wasserdampf und schließlich den Transport eines Teils der Rauchgase zur Freisetzung und des Restes zur Mischung mit den aus dem Vorheizelement stammenden Rauchgasen zwecks Herabsetzung der Temperatur der letzteren bis unter den Schmelzpunkt der oben erwähnten Salze.

9. Verfahren nach einem der vorangehenden Ansprüche, bei dem die Schlämme in einen zumindest teilweise getrockneten Zustand verdickt werden durch Behandeln der Schlämme im wesentlichen bei Abwesenheit von Sauerstoff und unter Vakuumbedingung mittels eines mehrstufigen Verdampfers unter Anwendung von Thermokompression.

10. Verfahren nach einem der Ansprüche 1 bis 8, bei dem die Schlämme auf einen mindestens teilweise getrockneten Zustand durch eine Autoverbrennung derselben eingedickt werden.

11. Verfahren nach einem der vorangehenden Ansprüche, bei dem der Aufschmelzschritt ausgeführt wird unter Verwendung eines Wannenofens der Bauart, wie sie für das Erschmelzen von Glas angewandt wird und Zuführen der notwendigen thermischen Energie teilweise mittels Verbrennung eines Brennstoffs mit Luft in einer reduzierten Menge, um Rauchgase zu erzeugen mit reduzierenden Eigenschaften und teilweise mittels elektrischen Stroms.

12. Verfahren nach Anspruch 11, bei dem die elektrische Energie von 10% bis zu 40 % der Gesamtenergie repräsentiert, die von dem Wannenofen verbraucht wird.

13. Verfahren nach Anspruch 11 oder 12, bei dem die elektrische Energie dem Ofen mittels mindestens eines Paares von entgegengesetzten Elektroden zugeführt wird, die in das in dem Ofen enthaltene flüssige Bad eingeführt sind, wobei das flüssige Bad einer sanften Bewegung unterworfen wird infolge der Konvektionsbewegungen, erzeugt durch die Hitze, welche durch die Elektroden erzeugt wird.

14. Anlage für die Umsetzung von Rückstandsschlämmen aus kommunalen und/oder industriellen Abwasseraufbereitungsprozessen in vollständig inerte Substanzen, umfassend einen mehrstufigen Verdampfer mit Autoklaven (1), innerhalb welchem die Schlämme teilweise unter Thermokompression getrocknet werden (A), eine Einrichtung (11) für das Mischen der teilweise getrockneten Schlämme (D) mit tonigen Substanzen (E) oder Substanzen, die hauptsächlich Silikate, Aluminatsilikate, freien Quarz oder vermahlenes Glas enthalten, eine Einrichtung (12) zum Realisieren der Reduzierung des feuchten Gemisches (F) aus Schlämmen und den genannten Substanzen in Granulat (G), einen Vorheizer (13), der in der Lage ist, das Trocknen der vorerwähnten Granulate (G) zu vervollständigen, einen Schmelzofen (14), innerhalb welchem die vorgeheizten Granulate (H) vollständig aufgeschmolzen werden, und Mittel zum Verfestigenlassen der aufgeschmolzenen Granulate durch Abkühlung.

15. Anlage nach Anspruch 14, dadurch gekennzeichnet, daß sie eine Einrichtung (17) umfaßt, die in der Lage ist, durch Verfestigung die Salze abzutrennen, die in den Rauchgasen enthalten sind, welche aus dem Vorheizer (13) stammen, einen Wärmetauscher (19) mit Leistung durch die von Salzen gereinigten Rauchgase versorgt, eine Leitung (20), die den Auslaß des Wärmetauschers (19) mit einem Schlot verbindet und mit dem Einlaß der genannten Einrichtung (17) zum Mischen der aus dem Wärmetauscher kommenden Rauchgase mit den von dem Vorheizer kommenden Rauchgasen zwecks Herabsetzung der Temperatur des Gemisches unter den Schmelzpunkt der oben erwähnten Salze.

16. Anlage nach Anspruch 15, dadurch gekennzeichnet, daß der Vorheizer (13) von einer Bauart mit Drehrohr ist und im Gegenstrom beheizt wird durch die heißen Rauchgase, die aus dem Schmelzofen (14) kommen.

## Revendications

1. Procédé pour la transformation des boues en surplus des procédés de purification des eaux recyclées civiles et/ou industrielles en substances complètement inertes comprenant les étapes de :
- réduction desdites boues en un état au moins partiellement desséché ;
- mélange desdites boues au moins partiellement desséchées avec des substances inertes choisies parmi le groupe constitué de : argile, argile mouillée de carrière, minéraux argileux, sables argileux, silice libre, verre dépoli, substances à base de silice contenant des silicates et/ou des silicates aluminés ;
- passage du mélange de boues au moins partiellement desséchées et de substances inertes à la forme granulaire ;
- préchauffage dudit mélange sous forme granulaire ;
- fusion dudit mélange sous forme granulaire à une température d'au moins 1 500 °C jusqu'à ce que le mélange soit complètement réduit à l'état liquide ; ladite opération de fusion étant réalisée dans une atmosphère réductrice ; et
- refroidissement du mélange fondu jusqu'à ce que la solidification se produise.

2. Procédé selon la revendication 1, dans lequel on fait ensuite refroidir la matière fondue très rapidement en pulvérisant sur celle-ci des jets d'eau froide de sorte que la matière fondue se solidifie et se désintègre simultanément en granules de matière vitrifiée dans laquelle sont encapsulés les silicates métalliques produits au cours de l'opération de fusion par la réaction chimique de la silice avec les métaux présents dans les boues.

3. Procédé selon la revendication 1, dans lequel on verse la matière fondue dans des moules, après quoi on la refroidit très lentement afin d'obtenir des produits céramisés de forme géométrique préétablie, dans lesquels sont encapsulés les silicates métalliques produits au cours de l'opération de fusion par la réaction chimique de la silice avec les métaux présents dans les boues.

4. Procédé selon l'une des revendications précédentes, dans lequel on forme des pastilles à partir du mélange de boues au moins partiellement desséchées et de substances inertes.

5. Procédé selon la revendication 4, dans lequel lesdites boues desséchées contiennent encore une quantité d'humidité fixée au préalable.

6. Procédé selon l'une des revendications précédentes, dans lequel ledit préchauffage est réalisé en mettant en contact le mélange à contre-courant de fumées chaudes et en opérant dans une atmosphère réductrice.

7. Procédé selon la revendication 6, caractérisé en ce qu'au cours dudit préchauffage, il se produit une calcination au moins partielle dudit mélange, en raison de l'expulsion d'une partie des substances organiques ; ledit préchauffage étant réalisé à une température d'environ 600 à 900 °C.

8. Procédé selon la revendication 6, caractérisé en ce qu'il comprend l'utilisation de fumées produites par ladite fusion pour la réalisation du préchauffage, la séparation successive, par solidification, des sels présents dans les fumées sortant du dispositif de préchauffage, l'échange de chaleur des fumées, ayant été purifiées desdits sels, à l'aide d'eau pour produire de la vapeur, et finalement, le transport d'une partie desdites fumées vers la sortie et le reste devant être mélangé avec les fumées sortant de l'élément de préchauffage afin de faire passer la température de ces dernières en dessous du point de fusion des sels susmentionnés.

9. Procédé selon l'une des revendications précédentes, dans lequel lesdites boues sont réduites en un état au moins partiellement desséché en traitant les boues sensiblement en l'absence d'oxygène et dans le vide au moyen d'un évaporateur à plusieurs étages avec thermocompression.

10. Procédé selon l'une des revendications 1 à 3, dans lequel les boues sont réduites en un état au moins partiellement desséché par une autocombustion de celles-ci.

11. Procédé selon l'une des revendications précédentes, dans lequel ladite étape de fusion est réalisée en utilisant un four à bassin du type utilisé pour faire fondre le verre et en fournissant l'énergie thermique nécessaire partiellement au moyen de la combustion d'un combustible avec de l'air en une quantité réduite, afin de produire des fumées ayant des propriétés réductrices, et partiellement au moyen de courant électrique.

12. Procédé selon la revendication 11, dans lequel l'énergie électrique représente de 10 % jusqu'à 40 % de l'énergie totale consommée par le four à bassin.

13. Procédé selon les revendications 11 ou 12, dans lequel on introduit l'énergie électrique dans le four au moyen d'au moins une paire d'électrodes opposées immergées dans le bain liquide contenu dans le four ; le bain liquide étant soumis à une légère agitation due aux mouvements par convection provoqués par le chauffage produit par lesdites électrodes.

14. Installation pour la transformation de boues en surplus de procédés de purification des eaux recyclées civiles et/ou industrielles en substances complètement inertes comprenant un évaporateur à plusieurs étages muni d'un autoclave (1), à l'intérieur duquel les boues se dessèchent partiellement (A), avec thermocompression, un dispositif (11) pour mélanger les boues partiellement desséchées (D) avec des substances argileuses (E) ou des substances contenant principalement des silicates, des silicates aluminés, de la silice libre ou du verre dépoli, un dispositif (12) capable de réaliser la réduction du mélange mouillé (F) de boues et desdites substances en granules (G), un préchauffeur (13) qui est capable d'achever le séchage des granules susmentionnées (G), un four de fusion (14) à l'intérieur duquel on fait fondre complètement les granules préchauffées (H), et un moyen pour permettre aux granules fondues de se solidifier par refroidissement.

15. Installation selon la revendication 14, caractérisée en ce qu'elle comprend un dispositif (17) capable de séparer, par solidification, les sels présents dans les fumées sortant dudit préchauffeur (13) un échangeur de chaleur (19), alimenté par lesdites fumées purifiées de sels, une canalisation (20) reliant la sortie dudit échangeur de chaleur (19) à une cheminée et à l'entrée dudit dispositif (17) pour mélanger les fumées sortant de ce même échangeur avec les fumées sortant du préchauffeur susmentionné afin de faire passer la température dudit mélange en dessous du point de fusion des sels susmentionnés.

16. Installation selon la revendication 15, caractérisée en ce que ledit préchauffeur (13) est du type muni d'un cylindre rotatif et est alimenté à contre-courant par les fumées chaudes sortant dudit four de fusion (14).
